Europäisches Patentamt

European Patent Office

Office européen des brevets

(19)

(11) Numéro de publication: **0 225 234**
**B1**

(12) **FASCICULE DE BREVET EUROPEEN**

(45) Date de publication du fascicule du brevet: **29.08.90**

(21) Numéro de dépôt: **86402420.3**

(22) Date de dépôt: **29.10.86**

(51) Int. Cl.⁵: **C 08 L 67/06,** C 08 J 5/04,
C 08 K 7/14

(54) Composition de résines thermodurcissables renforcée par des fils coupés.

(30) Priorité: **30.10.85 FR 8516124**

(43) Date de publication de la demande:
**10.06.87 Bulletin 87/24**

(45) Mention de la délivrance du brevet:
**29.08.90 Bulletin 90/35**

(84) Etats contractants désignés:
**AT BE CH DE ES FR GB IT LI LU NL SE**

(56) Documents cités:
**EP-A-0 000 683**
**EP-A-0 004 816**
**FR-A-2 279 815**
**GB-A-1 367 960**
**GB-A-2 037 298**

**Le dossier contient des informations techniques
présentées postérieurement au dépôt de la
demande et ne figurant pas dans le présent
fascicule.**

(73) Titulaire: **VETROTEX SAINT-GOBAIN
767 quai des Allobroges
F-73000 Chambéry (FR)**

(72) Inventeur: **Choudin, Claude
Route de Lovettaz Saint-Jean d'Arvey
F-73230 Saint-Alban Leysse (FR)**

(74) Mandataire: **Breton, Jean-Claude et al
SAINT-GOBAIN RECHERCHE 39, quai Lucien
Lefranc
F-93300 Aubervilliers Cedex (FR)**

Courier Press, Leamington Spa, England.

## Description

L'invention concerne une composition de résines polymérisables renforcée par des fils coupés, tels que des fils de verre, destinée à la réalisation d'objets obtenus par moulage, en particulier par moulage par injection.

L'invention concerne également un procédé permettant d'obtenir ladite composition de résines polymérisables.

Il est déjà connu d'utiliser comme matériau de moulage des compositions formées de mélange d'un polyester non saturé, d'un polymère thermoplastique, d'une substance monomère telle que le styrène auxquels on ajoute une charge minérale, un catalyseur, un stabilisant et un agent de démoulage, qui présentent un retrait très faible voire nul après polymérisation. Les polyesters utilisés pour obtenir ce résultat sont, en général, faiblement saturés.

Dans de nombreuses applications, les objets fabriqués à partir de ces compositions de résines polymérisables doivent présenter de bonnes propriétés mécaniques, en particulier une bonne résistance au choc. Pour ce faire, il est connu de mélanger à ces compositions des fils coupés, qui sont le plus souvent des fils de verre.

Ces fils de verre sont obtenus par la réunion d'un grand nombre de filaments, étirés mécaniquement à partir de verre fondu s'écoulant des orifices perforés à la base d'une filière chauffée par effet Joule. En cours d'étirage, ces filaments sont revêtus d'un ensimage puis rassemblés pour donner naissance à un fil présentant une certaine cohésion. Ce fil continu est ensuite coupé en tronçons de quelques millimètres à plusieurs dizaines de millimètres de longueur.

Lorsque les filaments sont revêtus d'un ensimage soluble dans la composition de résines, le fil coupé introduit dans ladite composition se désintègre et s'éparpille à l'état de filament lorsque l'ensemble est mélangé. Au contraire, si les filaments sont revêtus d'un ensimage insoluble le fil coupé introduit dans la composition de résines demeure intègre, même à l'issue de l'opération de mélange.

Dans le premier cas, l'élément de renforcement du produit final est essentiellement le filament de verre, dans le second cas c'est le fil formé des filaments restés collés les uns aux autres.

Selon que l'on a affaire à l'un ou l'autre type de renforcement, l'écoulement du mélange dans le moule, le degré d'orientation des fibres de verre et, par conséquent, les propriétés mécaniques et l'état de surface de l'objet finalement obtenu ne seront pas les mêmes.

Ainsi, les ensimages solubles sont connus pour conférer à l'objet un excellent état de surface, une résistance à la traction élevée, mais une résistance au choc relativement médiocre. Les ensimages insolubles sont réputés pour améliorer la résistance au choc mais au détriment de l'état de surface et de la résistance à la traction.

Prenant en considération les nombreux facteurs qui influent sur les qualités du produit finalement obtenu, l'homme du métier est placé devant différentes situations qui l'amènent, par exemple, à choisir une meilleure aptitude au moulage au détriment de telle propriété, ou à opter pour un excellent état de surface au détriment de la résistance au choc et inversement.

Dans un cas particulier, l'homme du métier a réussi à concilier une bonne aptitude au moulage, un niveau élevé des propriétés mécaniques et un excellent état de surface du produit final. Il s'agit d'un procédé de fabrication de plaques de résines thermoplastiques renforcées de fibre de verre, décrit par le brevet GB—A—1 367 960.

Ce procédé consiste à fabriquer en continu un mat de fils coupés, relativement longs et demeurant intègres, sur lequel on dépose une couche de fils coupés beaucoup plus courts et en grande partie désintégrés à l'état de filament. L'ensemble est simultanément chauffé et comprimé, ce qui a pour effet de faire pénétrer une partie des fibres courtes à l'état de filament entre les fibres longues demeurant à l'état de fil.

Si ce brevet divulgue une association particulière de fibres de différentes longueurs, il ne suggère aucun moyen valable pour obtenir un mélange homogène de résine et de fibres de longueurs différentes. En effet, ce brevet ne suggère aucune solution pour obtenir un tel mélange, en évitant la rupture des fibres (surtout des plus longues) provoquée par les forces de cisaillement, qui interviennent inévitablement lors de l'opération de malaxage et lors de l'opération de moulage, en particulier par injection.

La présente invention a pour objet une composition de résines polymérisables, renforcée de manière homogène par un mélange de fils coupés de longueurs différentes, qui présente une très bonne aptitude au moulage en général et qui confère au produit final un ensemble de caractéristiques mécaniques supérieur à celui des produits anlaogues actuellement connus, ainsi qu'un excellent état de surface.

L'invention a également pour objet un procédé d'obtention de cette composition de résines polymérisables, renforcée par un mélange de fils coupés de longueurs différentes.

Pour atteindre ce but, la composition de résines polymérisables selon l'invention qui comprend, outre des fils coupés, de longueurs différentes, les uns se trouvant à l'état dispersé sous forme de simples filaments, les autres demeurant à l'état de fil, les filaments qui les constituent restant liés, au moins un représentant de chacun des constituants suivants: un polyester insaturé, un polymère thermoplastique, une substance liquide monomère ayant au moins un groupe $CH_2=C<$ réactif polymérisable par molécule, une charge formée d'au moins une matière inerte et minérale, et éventuellement au moins une charge minérale active appelée agent de mûrissement, un catalyseur, un stabilisant ainsi qu'un agent de démoulage, est telle que les filaments se trouvant à l'état dispersé sont plus longs que les filaments collés demeurant à l'état de fils.

Parmi les différents constituants de la composition de l'invention, la nature du polyester utilisé joue un rôle important car elle va conditionner le processus de polymérisation et les propriétés du produit final.

Ainsi les polyesters décrits dans le brevet FR—A—1 530 817, qui présentent un poids moléculaire par double liaison carbone-carbone de 150 à 186 environ, peuvent être utilisés pour réaliser la présente invention. Néanmoins, la meilleure aptitude au moulage de la pâte de résines polymérisables et au démoulage de la pièce polymérisée est obtenue avec un polyester aromatique insaturé, dont le poids moléculaire par double liaison carbone-carbone est compris entre 350 et 528 et, de préférence, entre 350 et 438.

Les procédés de préparation de ce dernier type de polyester sont bien connus. On peut le préparer en condensant un acide dicarboxylique à insaturation éthylénique en alpha, bêta, ou un anhydride ou un mélange de ces derniers, et un acide ou un anhydride phtalique ou un mélange de ceux-ci avec un dialcool ou des mélanges de dialcools.

Ainsi, on peut notamment utiliser les acides (ou les anhydrides) maléique, fumarique, citraconique, chloromaléique, orthophtalique, isophthalique, téréphtalique.

Le dialcool (ou le mélange de dialcools) utilisé pourra être sélectionné parmi les composés suivants: éthylèneglycol, propylèneglycol, dipropylèneglycol, 1—3 butanediol et néopentylglycol. A ce polyester il sera ajouté, d'une manière connue en soi, un polymère thermoplastique. Il est préférable d'utiliser un polymère soluble dans la résine polyester qui permet d'obtenir facilement un mélange homogène. Ces polymères sont bien connus; il s'agit, par exemple, des homopolymères de vinylacétate, de méthacrylate de méthyle, de styrène ou des copolymères de méthacrylate de méthyle et de styrène ou de styrène et d'acrylonitrile.

Il est également possible d'ajouter un polymère insoluble tel que le polyéthylène ou le chlorure de polyvinyle.

Pour certaines applications, en particulier pour celles qui utilisent le procédé de moulage par injection, le rapport des proportions pondérales selon lesquelles sont introduits le polyester insaturé et le polymère thermoplastique a une influence non négligeable sur le résultat obtenu.

La composition de résines polymérisables donne les meilleurs résultats lorsque le rapport pondéral polymère thermoplastique/polyester insaturé reste compris entre 0,5 et 0,8 environ.

La composition de l'invention contient également un monomère liquide ou un mélange de monomères ayant au moins un groupe $CH_2=C<$ réactif polymérisable par molécule.

Ce monomère liquide doit pouvoir copolymériser avec le polyester aromatique afin de former un polymère réticulé. Ce liquide monomère est de préférence le styrène, mais d'autres liquides monomères dont l'emploi est également bein connu en pareille occurrence, peuvent être choisis par l'homme du métier.

La composition de l'invention comprend en outre au moins une charge minérale, inerte, telle que le carbonate de calcium, le silicate de calcium ou la silice; des charges allégées comme la vermiculite expansée ou des microsphères de verre sont également utilisables.

La composition de l'invention peut éventuellement comprendre au moins une charge minérale active, appelée couramment agent de mûrissement. Cet agent est généralement utilisé pour augmenter le viscosité du mélange. Il est choisi de préférence parmi les constituants suivants: oxyde ou hydroxyde de magnésium ou de calcium.

Des catalyseurs de polymérisation, des inhibiteurs d'oxydation qui évitent la prépolymérisation de la composition en cours de stockage, de même que des agents de démoulage sont également introduits dans ladite composition.

Aux différents constituants précédents, mélangés au préalable, sont ajoutés des fils coupés de longueurs différentes. Les fils utilisés sont généralement des fils de verre, mais d'autres fils peuvent être employés, dès lors qu'ils sont susceptibles de renforcer une matrice organique.

Lorsqu'il s'agit de fils de verre, la longueur des fils coupés utilisés est généralement comprise entre 6 et 25 millimètres et de préférence entre 13 et 25 millimètres.

Les fils de verre se présentent avantageusement sous les formes suivantes: les uns sont constitués de filaments de verre revêtus d'un ensimage présentant une forte solubilité dans ls mélange de constituants organiques; ce type d'ensimage est décrit, par exemple, dans le brevet français FR—A—2 398 702. Les autres fils sont constitués de filaments de verre revêtus d'un ensimage relativement peu soluble dans ledit mélange; ce genre d'ensimage est décrit, par exemple, dans le brevet français FR—A—2 421 982 ou le brevet américain US—A—3 702 276. Par simplification, les deux catégories d'ensimages seront qualifiées ci-après de "soluble" et "insoluble".

Ainsi les fils coupés, entrant dans la composition selon l'invention, seront de préférence revêtus d'un ensimage soluble pour les plus longs, et d'un ensimage insoluble pour les plus courts.

Pour de nombreuses pièces obtenues par moulage, en particulier pour des éléments de carrosserie de véhicules automobiles, les meilleurs caractéristiques sont obtenues lorsque la proportion pondérale des fils courts revêtus par exemple d'un ensimage insoluble, est supérieure à la proportion pondérale des fils longs revêtus par exemple d'un ensimage soluble.

Les meilleurs résultats sont atteints lorsque le rapport des proportions pondérales fils longs/fils courts est compris entre 0,6 et 0,7.

Les compositions selon l'invention couvrent une gamme assez large de formulations définies à partir des limites pondérales suivantes:

| polyester insaturé | 13 à 20% |
|---|---|
| polymère thermoplastique | 10 à 15% |
| monomère | 0 à 2% |
| charge minérale inerte | 40 à 55% |
| fils de verre coupés | 15 à 25% |

Lorsque la composition est destinée à un procédé de moulage par injection, il est connu de mélanger dans un premier temps les divers constituants organiques et la charge minérale, puis, dans un deuxième temps, d'ajouter les fils coupés et de procéder à un second mélange. Celui-ci est généralement réalisé dans un mélangeur différent un celui qui a été utilisé pour le premier mélange.

Cette seconde opération est délicate par elle peut être à l'origine d'une détérioration des fils de verre, et dans d'une diminution des propriétés mécaniques du produit fini. Cette détérioration est du reste plus ou moins rapide selon que les fils sont revêtus d'un ensimage soluble ou insoluble.

Afin de préserver au mieux les propriétés du produit final, la composition de l'invention est préparée selon le procédé suivant.

Dans une première phase, les différents constituants autres que les fils de verre sont mélangés d'une manière connue en soi; dans une deuxième phase, on ajoute à ce mélange les fils de verre coupés revêtus d'un ensimage insoluble et on procède à un nouveau mélange; dans une troisième phase, un ajoute au mélange précédent les fils coupés revêtus d'un ensimage soluble et on procède à un dernier mélange.

Ce procédé permet de réduire considérablement la dégradation des fils de verre, notamment lorsque le pourcentage pondéral des fils longs est élevé, tout en assurant une bonne imprégnation des fils par les constituants organiques.

Pour la deuxième et la troisième phase, il est recommandé d'utiliser un autre mélangeur que celui utilisé pour la première phase. Des mélangeurs du type à bras double 2 présentent un jeu suffisant entre la paroi de la cuve et les bras pour conserver la longueur de la plupart des fibres de verre; des malaxeurs à système turbulent conviennent également.

La composition ainsi réalisée est transférée dans une trémie, qui alimente sous pression un dispositif d'injection à vis ou à piston. Il est préférable d'utiliser un dispositif d'injection, tel que celui décrit dans les brevets français FR 2 483 318 et FR 2 495 051.

Les exemples suivants permettront de mettre en évidence les avantages conférés par l'invention.

Exemple N° 1.

Composition

| polyester aromatique insaturé | 17,00% |
|---|---|
| polymère thermoplastique | 11,00% |
| styrène | 0,65% |
| carbonate de calcium | 50,00% |
| stéarate de calcium | 1,00% |
| perbenzoate de tertiobutyle | 0,25% |
| peroctoate de tertiobutyle | 0,10% |
| parabenzoquinone | 0,01% |
| fibre de verre | |
| P276 (13 mm) | 15,00% |
| P279 (25 mm) | 5,00% |

Le polyester aromatique insaturé est commercialisé par la Société BAYER sous la référence "W 20". Le polymère est commercialisé par la Société UNION CARBIDE sous la référence "LP 40". Le P 276 est la référence d'un ensimage insoluble dans la formulation est décrite dans le brevet français FR 2 421 982; le P 279 est la référence d'un ensimage soluble dont la formulation est décrite dans le brevet français FR 2 398 702.

La composition est préparée comme suit:

Dans un récipient de capacité suffisante on introduit successivement la résine polyester, le styrène, les catalyseurs et le polymère thermoplastique. L'ensemble de ces constituants est mélangé à l'aide d'un agitateur à fort taux de cisaillement, pendant quelques minutes.

On introduit alors successivement l'agent de démoulage puis la charge. L'opération de mélange est poursuivie jusqu'à l'obtention d'une pâte homogène qui est ensuite transférée dans un malaxeur. La température de la pâte étant stabilisée, on introduit les fibres de verre revêtues de l'ensimage insoluble puis, quelques instants après, les fibres de verre revêtues de l'ensimage soluble en poursuivant le malaxage.

A titre d'ensemble, on utilise un malaxeur de 150 litres de volume utile pour préparer environ 80 kilogrammes de mélange. Le temps total de malaxage de la pâte et des deux catégories de fibres de verre est de 8 à 10 minutes. Le mélange ainsi obtenu est injecté dans un moule test définissant une cavité de 360×180×3 mm. La température de moulage doit être comprise entre 160 et 180°C.

Des éprouvettes destinées à des mesures de résistance mécanique sont prélevées dans la plaque moulée suivant deux directions orthogonales et conduisent aux valeurs suivantes:

| résistance flexion (Norme NFT 51 001) | 80 à 90 MPa |
|---|---|
| module à l'origine en flexion | 10500 à 11500 MPa |
| résistance au choc (Norme NFT 51 035) | 0,5 à 0,7 J/cm$^3$ |

A titre de comparaison, la résistance à la flexion et le module des éprouvettes réalisées par injection de mélanges connus sont sensiblement identiques, mais leur résistance au choc est nettement inférieure (entre 0,3 et 0,4 J/cm$^3$).

## Exemple N° 2

Le matériau mis en oeuvre est le même que celui décrit dans l'exemple n° 1.

La pièce obtenue par moulage par injection, à l'aide d'une presse susceptible d'exercer une pression de 2300 t, présente les dimensions suivantes: 750×580×3 mm. Il s'agit d'une pièce test figurant un panneau de portière d'un véhicule automobile. Des éprouvettes prélevées sur la pièce conduisent aux résistances mécaniques suivantes:

| | |
|---|---|
| résistance flexion | 79 MPa |
| module à l'origine en flexion | 9460 MPa |
| résistance à la traction (Norme NFT 51 034) | 32 MPa |
| résistance au choc | 0,5 J/cm$^3$ |

## Exemple N° 3

Le matériau mis en oeuvre est le même que celui décrit dans l'exemple n° 1.

La pièce obtenue par injection à l'aide de la presse utilisée dans l'exemple précédent est une calandre automibile. Des éprouvettes prélevées sur l'ensemble de la pièce conduisent aux résultats suivants:

| | |
|---|---|
| résistance flexion | 89 MPa |
| module flexion | 11630 MPa |
| résistance au choc | 0,53 J/cm$^3$ |

La résistance au choc mesurée sur une pièce industrielle à partir de mélanges connus donne, en moyenne, une résistance au choc de 0,3 J/cm$^3$.

## Exemple N° 4

Le matériau mis en oeuvre est le même que celui décrit dans l'exemple n° 1.

La pièce obtenue par injection à l'aide de la presse déjà mentionnée est un volet arrière de véhicule automobile. Les éprouvettes sont prélevées sur l'ensemble de la pièce et conduisent aux résultats suivants:

| | |
|---|---|
| résistance flexion, contrainte à rupture | 76 MPa |
| module flexion | 8200 MPa |
| résistance au choc | 0,71 J/cm$^3$ |

## Revendications

1. Composition de résines polymérisables renforcées par des fils coupés, de longueurs différentes, les uns se trouvant à l'état dispersé sous forme de simples filaments, les autres demeurant à l'état de fil, les filaments est les constituent restant liés, comprenant au moins un représentant de chacun des constituants suivants: un polyester insaturé, un polymère thermoplastique, une substance liquide monomère ayant au moins un groupe $CH_2=C<$ réactif polymérisable par molécule, une charge formée d'au moins une matière inerte et minérale et éventuellement une charge minérale active ou agent de mûrissement, un catalyseur, un inhibiteur ainsi qu'un agent de démoulage, les filaments dispersés étant plus longs que les filaments collés entre eux demeurant à l'état de fil.

2. Composition de résines polymérisables selon la revendication 1, où la proportion pondérale des fils courts est supérieure à la proportion pondérale des fils longs à l'état dispersé sous forme de filaments.

3. Composition de résines polymérisables selon la revendication 2, où le rapport des proportions pondérales fil à l'état dispersé/fil demeurant à l'état de fil est compris entre 0,6 et 0,7.

4. Composition de résines polymérisables selon l'une des revendications précédentes, où les fils coupés sont exclusivement des fils de verre.

5. Composition de résines polymérisables selon la revendication 4, où les fils courts sont constitués de filaments de verre revêtus d'un ensimage insoluble, et que les fils longs sont constitués de filaments de verre revêtus d'un ensimage soluble.

6. Composition de résines polymérisables selon la revendication 4, comprenant les constituants ci-après, selon les limites poindérales suivantes:

| | |
|---|---|
| polyester insaturé | 13 à 20% |
| polymère thermoplastique | 10 à 15% |
| monomère | 0 à 2% |
| charge minérale | 40 à 55% |
| fils de verre coupés | 15 à 25% |

ainsi qu'au moins un catalyseur, un inhibiteur, un agent de démoulage et éventuellement un agent de mûrissement.

7. Composition de résines polymérisables selon la revendication 6, où le rapport pondéral polymère thermoplastique/polyester insaturé est compris entre 0,5 et 0,8.

8. Procédé d'obtention d'une composition de résines polymérisables renforcée de fils coupés, tels que des fils de verre, comprenant au moins un représentant des constituants suivants: un polyester insaturé, un polymère thermoplastique, un monomère possédant au moins un groupe $CH_2=C<$ réactif polymérisable par molécule, une charge inerte et minérale et éventuellement un agent de mûrissement, un catalyseur, un inhibiteur ainsi qu'un agent de démoulage, et qui consiste à mélanger ces constituants avant d'y ajouter les fils de verre coupés, où dans une deuxième phase on ajoute à ce mélange des fils de verre coupés revêtus d'un ensimage insoluble et on procède à un nouveau mélange et, dans une troisième phase, on ajoute au mélange précédent les fils de verre coupés revêtus d'un ensimage soluble et on procède à un dernier mélange.

9. Produit composite renforcé de fils coupés obtenu par moulage par compression de la composition de résines polymérisables définie par l'une des revendications 1 à 7.

10. Produit composite renforcé de fils coupés obtenu par moulage par injection de la composition de résines polymérisables définie par l'une des revendications 1 à 7.

## Patentansprüche

1. Zusammensatzung aus mit geschnittenen Fesern unterschiedlicher Länge verstärkten polymerisierbaren Harzen, von denen sich die einen in Form einfacher Filamente in dispergiertem Zustand befinden, die anderen im Faserzustand verbleiben und die Filamente, die sie bilden, verbunden bleiben, welche wenigstens einen Repräsentanten von jedem der folgenden Bestandteile umfaßt: einen ungesättigten Polyester, ein thermoplastisches Polymer, eine monomere flüssige Substanz mit wenigstens einer polymerisierbaren reaktiven Gruppe $CH_2=C<$ pro Molekül, einen von wenigstens einem inerten und mineralischen Mineral gebildeten Füllstoff und gegebenenfalls einen aktiven mineralischen Füllstoff oder ein Reifungsmittel, einen Katalysator, einen Inhibitor sowie ein Entformungsmittel, wobei die dispergierten Filamente länger sind als die zwischen ihnen verklebten Filamente, die im Faserzustand verbleiben.

2. Zusammensetzung aus polymerisierbaren Harzen nach Anspruch 1, worin der Gewichtsanteil der kurzen Fasern größer ist als der Gewichtsanteil der langen Fasern in dispergiertem Zustand in Filamentform.

3. Zusammensetzung aus polymerisierbaren Harzen nach Anspruch 2, worin das Verhältnis der Gewichtsanteiles der Fasern in dispergiertem Zustand/Fasern im Faserzustand zwischen 0,6 und 0,7 liegt.

4. Zusammensetzung aus polymerisierbaren Harzen nach einem der vorstehenden Ansprüche, worin die geschnittenen Fasern ausschließlich Glasfasern sind.

5. Zusammensetzung aus polymerisierbaren Harzen nach Anspruch 4, worin die kurzen Fasern von Glasfilamenten gebildet werden, die mit einer unlöslichen Schmälze beschichtet sind, und die langen Fasern von Glasfilamenten gebildet werden, die mit einer löslichen Schmälze beschichtet sind.

6. Zusammensetzung aus polymerisierbaren Harzen nach Anspruch 4, welche die nachstehenden Bestandteile in den folgenden Gewichtsbereichen umfaßt:

| | |
|---|---|
| ungesättgiter Polyester | 13—20% |
| thermoplastisches Polymer | 10—15% |
| Monomer | 0— 2% |
| mineralischer Füllstoff | 40—55% |
| geschnittene Glasfasern | 15—25% |

sowie wenigstens einen Katalysator, einen Inhibitor, ein Entformungsmittel und gegebenenfalls ein Reifnungsmittel.

7. Zusammensetzung aus polymerisierbaren Harzen nach Anspruch 6, worin das Gewichtsverhältnis thermoplastisches Polymer/ ungesättigtes Polymer zwischen 0,5 und 0,8 liegt.

8. Verfahren zur Erzeugung einer Zusammensetzung aus polymerisierbaren Harzen, die durch geschnittene Fasern, wie Glasfasern, verstärkt sind, welche wenigstens einen Repräsentanten der folgenden Bestandteile umfaßt: einen ungesättigten Polyester, ein thermoplastisches Polymer, ein Monomer, das wenigstens eine reaktive polymerisierbare Gruppe $CH_2=C<$ pro Molekül besitzt, einen inerten und mineralischen Füllstoff und gegebenenfalls ein Reifungsmittel, einen Katalysator, einen Inhibitor sowie ein Entformungsmittel, das darin besteht, diese Bestandteile zu mischen, bavor die geschnittenen Glasfasern zugegeben werden, in dem man in einer zweiten Phase zu der Mischung mit einer unlöslichen Schmälze beschichtete geschnittene Glasfasern zufügt und eine erneute Mischung vornimmt und, in einer dritten Phase zur vorstehenden Mischung mit einer löslichen Schmälze beschichtete geschnittene Glasfasern zufügt und eine letzte Mischung vornimmt.

9. Mit geschnittenen Fasern vestärktes Verbundprodukt, erhalten durch Praßformen der durch einen der Ansprüche 1 bis 7 definierten Zusammensetzung aus polymerisierbaren Harzen.

10. Mit geschnittenen Fasern verstärktes Verbundprodukt, erhalten durch Spritzguß der in einem der Ansprüche 1 bis 7 definierten Zusammensetzung aus polymerisierbaren Harzen.

## Claims

1. Compound of polymerisable resins reinforced with cut threads, of different lengths, some being in the dispersed state in the form of simpie filaments and others remaining in the thread state, the filaments of which they are formed remaining bonded, comprising at least one of each of the following constituents: an unsaturated polyester, a thermoplastic polymer, a monomer liquid substance having at least one reactive polymerisable $CH_2=C<$ group per molecule, a filler formed of at least one inert mineral material and possibly an active mineral filler or ripening agent, a catalyst, an inhibitor as well as a mould release agent, the dispersed filaments being longer than the filaments bonded to one another remaining in the thread state.

2. Polymerisable resin compound according to Claim 1, wherein the weight proportion of the short threads is greater than the weight proportion of the long threads in the dispersed state in the form of filaments.

3. Polymerisable resin compound according to Claim 2, wherein the ratio between the weight proportions of threads in the dispersed state and threads remaining in the thread state is comprised between 0.6 and 0.7.

4. Polymerisable resin compound according to one of the preceding Claims, wherein the cut threads are exclusively glass threads.

5. Polymerisable resin compound according to Claim 4, wherein the short threads consist of glass filaments coated with an insoluble size, and the long threads are formed of glass filaments coated with a soluble size.

6. Polymerisable resin compound according to Claim 4, comprising the following constituents according to the following weight restrictions:

| | |
|---|---|
| unsaturated polyester | 13—20% |
| thermoplastic polymer | 10—15% |
| monomer | 0— 2% |
| mineral filler | 40—55% |
| cut glass threads | 15—25% |

as well as at least one catalyst, one inhibitor, one mould release agent and possibly a ripening agent.

7. Polymerisable resin compound according to Claim 6, wherein the weight ratio of thermoplastic polymer to unsaturated polyester is comprised between 0.5 and 0.8.

8. Process for obtaining a polymerisable resin compound reinforced with cut threads, such as glass threads, comprising at least one of each of the following constituents: an unsaturated polyester, a thermoplastic polymer, a monomer having at least one reactive polymerisable $CH_2=C<$ group per molecule, an inert mineral filler and possibly a ripening agent, a catalyst, an inhibitor as well as a mould release agent, and which consists in mixing these constituents before adding thereto the cut glass threads, wherein, in the second stage, there is added to this mixture cut glass threads coated with an insoluble size and a new mixture is produced and, in a third stage, there is added to the preceding mixture cut glass threads coated with a soluble size and a final mixture is produced.

9. Composite product reinforced with cut threads, obtained by compression moulding the polymerisable resin compound defined in one of Claims 1—7.

10. Composite product reinforced with cut threads obtained by injection moulding the polymerisable resin compound defined in one of Claims 1—7.